# FASCICULE DE BREVET EUROPEEN

(11) **EP 4 481 212 B1**
(45) Date de publication et mention de la délivrance du brevet: **18.03.2026**
(21) Numéro de dépôt: 24183226.0
(22) Date de dépôt: 19.06.2024
(51) Int. Cl.: F16B 45/02

(54) **MOUSQUETON, NOTAMMENT POUR L'ESCALADE ET L'ALPINISME**
KARABINERHAKEN, INSBESONDERE ZUM KLETTERN UND BERGSTEIGEN
CARABINER, PARTICULARLY FOR CLIMBING AND MOUNTAINEERING

(30) Priorité: 20.06.2023 FR 2306380
(43) Date de publication de la demande: 25.12.2024
(73) Titulaire: Courant, 49000 Angers (FR)
(72) Inventeur: GLAUSER, Laurent, 73000 Chambery (FR); COURANT, Nicolas, 44500 La Baule (FR)
(74) Mandataire: Ipsilon

(56) Documents cités:
- EP-A1- 0 596 308
- JP-A- H0 942 264

## Description

La présente invention concerne un mousqueton, notamment pour l'escalade et l'alpinisme.

Elle concerne en particulier un mousqueton comprenant un corps dit annulaire ouvert présentant une ouverture d'accès à l'intérieur dudit corps, un doigt de fermeture de ladite ouverture relié audit corps par une liaison articulée pour un déplacement dudit doigt de fermeture entre une position fermée et une position ouverte de ladite ouverture d'accès, un organe de verrouillage du doigt de fermeture en position fermée, cet organe de verrouillage étant configuré pour passer d'une position inactive à une position active, sous l'effet d'une pression exercée sur ledit organe de verrouillage depuis l'intérieur dudit corps en direction de l'extérieur dudit corps, cet organe de verrouillage formant, en position active, une butée de verrouillage du doigt de fermeture contre laquelle une partie active du doigt de fermeture bute lors d'un déplacement du doigt de fermeture de la position fermée à la position ouverte de l'ouverture d'accès.

Des mousquetons sont connus comme l'illustre le document EP0596308.

Des mousquetons dont le corps est généralement en forme de C avec un doigt de fermeture relié de manière articulée au corps sont bien connus comme l'illustre par exemple le brevet EP 1 710 464. Dans un tel mousqueton, il est important que le doigt de fermeture soit maintenu de manière sûre en position fermée et ne puisse pas être ouvert par inadvertance. Cette fermeture de manière sûre du doigt de fermeture est essentielle lorsque le mousqueton est sous charge, c'est-à-dire, constitue l'interface entre, par exemple, une corde tendue passant dans le mousqueton et un équipement individuel, tel qu'un harnais porté par un opérateur. Dans ce cadre, il est apparu sur le marché des mousquetons qui, lorsqu'ils sont sous charge, permettent l'actionnement automatique d'un organe de verrouillage du doigt de fermeture sans intervention de l'opérateur. L'inconvénient d'un tel actionnement automatique de l'organe de verrouillage est qu'il peut intervenir à tout moment y compris lorsque le doigt de fermeture est en position ouverte empêchant alors la fermeture du doigt de fermeture.

Un but de l'invention est de proposer un mousqueton dont la conception permet une fermeture complète du doigt de fermeture en toutes circonstances y compris dans les conditions d'un actionnement automatique de l'organe de verrouillage du doigt de fermeture.

A cet effet, l'invention a pour objet un mousqueton selon la revendication 1, comprenant un corps dit annulaire ouvert présentant une ouverture d'accès à l'intérieur dudit corps, un doigt de fermeture de ladite ouverture relié audit corps par une liaison articulée pour un déplacement dudit doigt de fermeture entre une position fermée et une position ouverte de ladite ouverture d'accès, un organe de verrouillage du doigt de fermeture en position fermée, cet organe de verrouillage étant configuré pour passer d'une position inactive à une position active, activable sous l'effet d'une pression exercée sur ledit organe de verrouillage depuis l'intérieur dudit corps en direction de l'extérieur dudit corps, cet organe de verrouillage formant en position active une butée de verrouillage du doigt de fermeture contre laquelle une partie active du doigt de fermeture bute lors d'un déplacement du doigt de fermeture de la position fermée à la position ouverte de l'ouverture d'accès, caractérisé en ce que la partie active du doigt de fermeture en contact d'appui avec l'organe de verrouillage, à l'état activé de l'organe de verrouillage et entraîné en déplacement du doigt de fermeture de la position fermée à la position ouverte de l'ouverture d'accès, est une partie escamotable configurée pour s'effacer par contact d'appui avec l'organe de verrouillage, en position active de l'organe de verrouillage lors du passage du doigt de fermeture de la position ouverte à la position fermée du doigt de fermeture, pour permettre le passage du doigt de fermeture de la position ouverte à la position fermée y compris en position active de l'organe de verrouillage.

La conception du doigt de fermeture permet, du fait de la présence d'une partie escamotable, d'amener le doigt en position fermée y compris en position active de l'organe de verrouillage. La fermeture du doigt de fermeture peut ainsi s'opérer en toutes circonstances. Pour autant, une fois le doigt de fermeture en position fermée, toute ouverture du doigt de fermeture en position active de l'organe de verrouillage est impossible.

Selon un mode de réalisation de l'invention, la partie active escamotable du doigt de fermeture est une partie montée, pour le passage d'une position non effacée à une position effacée, mobile à coulissement dans une glissière ménagée dans le doigt de fermeture, et le doigt de fermeture comprend un organe, tel qu'un ressort, de rappel de ladite partie active escamotable en position non effacée.

Selon un mode de réalisation de l'invention, la partie active escamotable du doigt de fermeture est disposée au niveau de l'extrémité dite libre du doigt de fermeture opposée à celle couplée au corps par une liaison articulée.

Selon un mode de réalisation de l'invention, l'organe de verrouillage présente une surface de came formant rampe avec laquelle la partie active escamotable du doigt de fermeture est, en position active de l'organe de verrouillage, en contact d'appui, lors du passage du doigt de fermeture de la position ouverte à la position fermée de l'ouverture d'accès, cette surface de came étant interrompue au moins en position de fin de course de fermeture du doigt de fermeture pour le passage de la partie active escamotable du doigt de fermeture d'une position effacée à une position non effacée.

Selon un mode de réalisation de l'invention, la liaison articulée reliant le doigt de fermeture de ladite ouverture audit corps pour un déplacement dudit doigt de fermeture entre une position fermée et une position ouverte de ladite ouverture d'accès est une liaison à pivotement et le doigt de fermeture est configuré pour passer de la position fermée à la position ouverte de l'ouverture d'accès par déplacement à pivotement en direction de l'intérieur dudit corps.

Selon un mode de réalisation de l'invention, l'organe de verrouillage est, pour son passage d'une position inactive à une position active, un organe pivotant couplé à pivotement audit corps, cet organe de verrouillage s'étendant à l'intérieur dudit corps le long d'une surface périphérique interne dudit corps.

Selon un mode de réalisation de l'invention, la liaison articulée reliant le doigt de fermeture de ladite ouverture audit corps pour un déplacement dudit doigt de fermeture entre une position fermée et une position ouverte de ladite ouverture d'accès étant une liaison à pivotement autour d'un axe, l'organe de verrouillage est, pour le passage d'une position inactive à une position active, monté mobile à pivotement autour d'un axe parallèle à l'axe de pivotement de la liaison articulée du doigt de fermeture au corps.

Selon un mode de réalisation de l'invention, le mousqueton comprend un organe supplémentaire de verrouillage du doigt de fermeture en position fermée, cet organe supplémentaire de verrouillage, appelé deuxième organe de verrouillage, étant monté mobile entre une première position dite déverrouillée dans laquelle le doigt de fermeture est libre de de se déplacer entre ses positions ouverte et fermée et une seconde position dite de verrouillage dans laquelle le doigt de fermeture est maintenu en position fermée, ce deuxième organe de verrouillage étant équipé d'un organe élastiquement déformable de rappel en seconde position de verrouillage.

Selon un mode de réalisation de l'invention, le deuxième organe de verrouillage est formé par un levier pivotant muni d'une lumière de verrouillage coopérant avec une lumière de verrouillage ménagée dans ledit corps, lesdites lumières délimitant entre elles un logement de réception d'au moins une partie du doigt de fermeture de dimension et/ou de forme ajustables en fonction de la position occupée par le deuxième organe de verrouillage.

Selon un mode de réalisation de l'invention, le logement de réception d'au moins une partie du doigt de fermeture ménagé par lesdites lumières est, en première position du deuxième organe de verrouillage, un logement circulaire emprisonnant la partie du doigt de fermeture disposée dans ledit logement, pour assurer un maintien du doigt de fermeture en position fermée, ce logement formant, en seconde position de verrouillage du deuxième organe de verrouillage, un chemin de guidage allongé apte à être parcouru par la partie du doigt de fermeture disposée dans ledit logement, à l'état entraîné en déplacement du doigt de fermeture entre ses positions fermée et ouverte.

### Brève description des dessins

L'invention sera bien comprise à la lecture de la description suivante d'exemples de réalisation, en référence aux dessins annexés dans lesquels :
[Fig. 1] représente une vue en perspective d'un mousqueton en positions fermée du doigt de fermeture et inactive de l'organe de verrouillage, le deuxième organe de verrouillage étant en première position, c'est à dire en position de verrouillage du doigt de fermeture en position fermée ;
[Fig. 2] représente une vue partielle en perspective d'un mousqueton en positions fermée du doigt de fermeture et inactive de l'organe de verrouillage, le deuxième organe de verrouillage ayant été omis ;
[Fig. 3] représente une vue en perspective d'un mousqueton en position éclatée des éléments le constituant ;
[Fig. 4] représente une vue partielle en perspective d'un mousqueton en position éclatée des éléments le constituant ;
[Fig. 5] représente une vue en perspective d'un mousqueton illustrant le passage du doigt de fermeture de la position fermée à la position ouverte en position inactive de l'organe de verrouillage et en deuxième position du deuxième organe de verrouillage, c'est à dire en position de non-verrouillage du doigt de fermeture ;
[Fig. 6] représente une vue partielle en perspective d'un mousqueton illustrant en position fermée du doigt de fermeture, le passage de la position inactive à la position active de l'organe de verrouillage ;
[Fig. 7] représente une vue partielle en perspective d'un mousqueton en position fermée du doigt de fermeture et en position active de l'organe de verrouillage, avec une vue de détail de la butée formée par l'organe de verrouillage ;
[Fig. 8] représente vue partielle en perspective d'un mousqueton illustrant le passage de la position ouverte à la position fermée du doigt de fermeture en position active de l'organe de verrouillage.

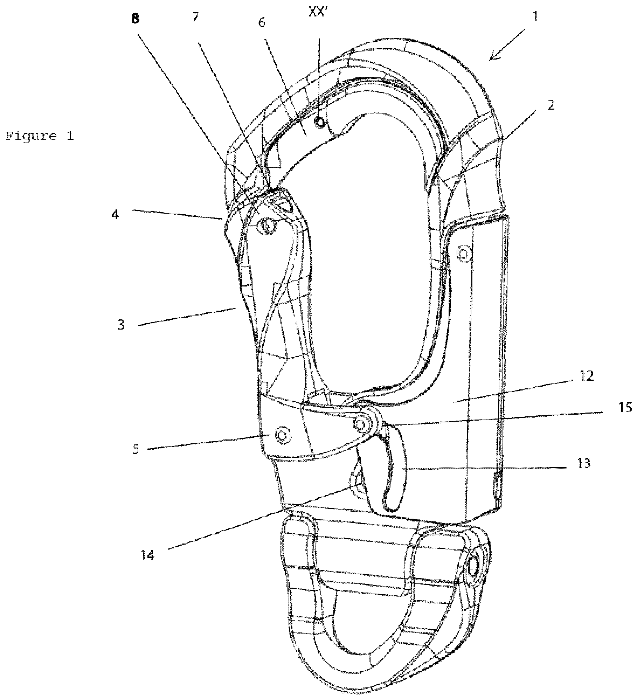

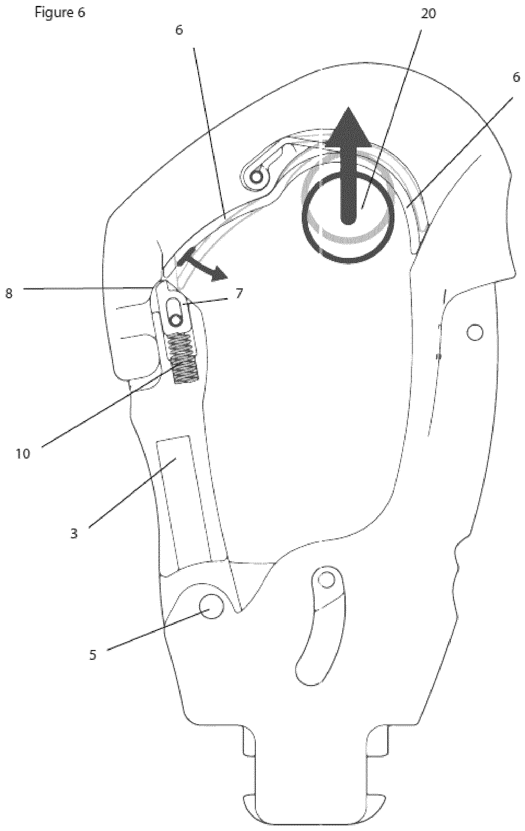

Comme illustré à la figure 1, le mousqueton 1, objet de l'invention, comprend un corps 2 annulaire ouvert réalisé ici en forme de C. Ce corps peut être en métal ou en plastique. L'ouverture du C, constituée par l'espace laissé libre entre les deux extrémités du C, forme une ouverture 4 d'accès à l'intérieur du corps 2. Cet intérieur du corps 2 sert à recevoir un élément de transmission de force, tel qu'une corde 20, qui, à l'état positionné dans le corps, entoure partiellement ledit corps 2 de manière en soit connue. Cette corde 20 est illustrée schématiquement à la figure 6.

Un doigt 3 de fermeture de l'ouverture 4 d'accès à l'intérieur du corps 2 est relié au corps 2 en particulier à une extrémité du C du corps 2 par une liaison 5 articulée. Cette liaison 5 articulée, qui relie le doigt 3 de fermeture de l'ouverture 4 audit corps 2 pour un déplacement du doigt 3 de fermeture entre une position fermée et une position ouverte de l'ouverture 4 d'accès, est une liaison à pivotement. Le doigt 3 de fermeture est configuré pour passer de la position fermée à la position ouverte de l'ouverture 4 d'accès par déplacement à pivotement en direction de l'Intérieur du corps 2.

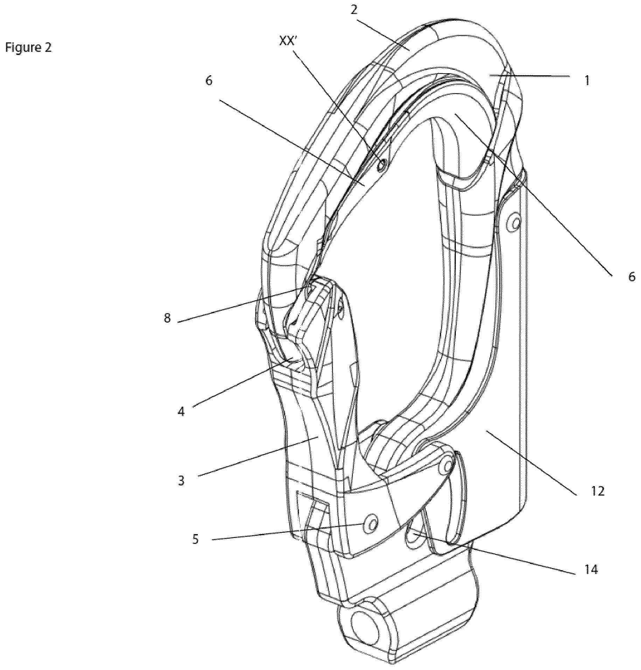

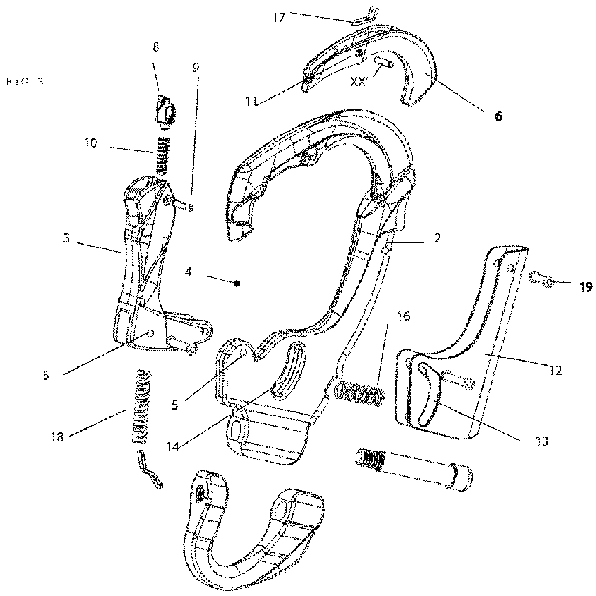

L'axe de pivotement de la liaison 5 à pivotement s'étend perpendiculairement au plan du C du corps 2 du mousqueton 1. En position fermée, l'extrémité libre du doigt 3 de fermeture, opposée à celle reliée au corps 2 par la liaison 5 articulée, vient, par l'un de ses côtés, en contact d'appui avec l'autre extrémité du C du corps pour fermer ladite ouverture 4 du corps 2, comme cela est visible à la figure 2. Un ressort 18, visible à la figure 3, rappelle le doigt 3 de fermeture en position fermée.

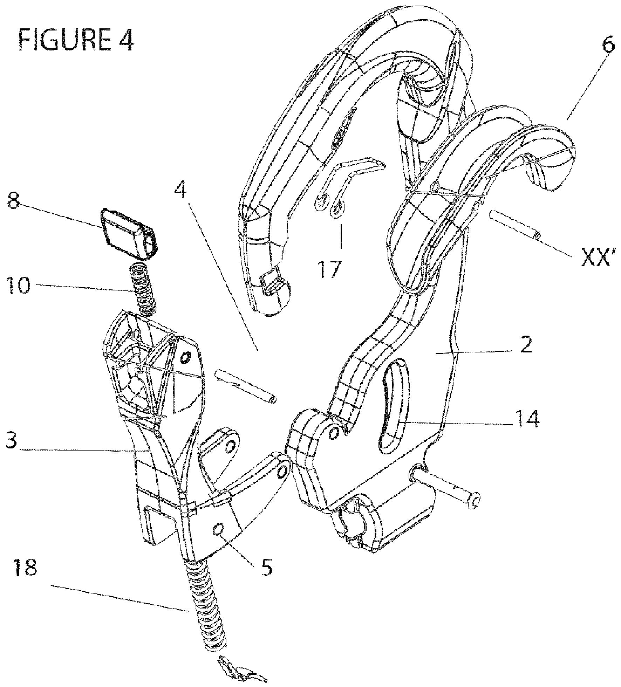

Le mousqueton 1 comprend un organe 6 de verrouillage du doigt 3 de fermeture en position fermée. Cet organe 6 de verrouillage, visible à la figure 4, est activable sous l'effet d'une pression exercée sur l'organe 6 de verrouillage depuis l'intérieur du corps 2 en direction de l'extérieur du corps 2. Cet organe 6 de verrouillage forme en position active, une butée 7 de verrouillage du doigt 3 de fermeture contre laquelle une partie 8 active du doigt 3 de fermeture bute lors d'un déplacement du doigt 3 de fermeture de la position fermée à la position ouverte de l'ouverture 4 d'accès.

Dans les exemples représentés, cet organe 6 de verrouillage est, pour son passage d'une position inactive à une position active, un organe pivotant couplé au corps 2 à pivotement autour d'un axe XX'. À nouveau l'axe XX' de pivotement de l'organe 6 de verrouillage s'étend perpendiculairement au plan du C du corps 2. Cet axe XX' de pivotement est également parallèle à l'axe de pivotement de la liaison 5 articulée du doigt 3 de fermeture au corps 2. Cet organe 6 de verrouillage s'étend à l'intérieur du corps 2 le long d'une surface périphérique interne du corps 2. En particulier, cet organe 6 de verrouillage s'étend le long de la partie du C du corps 2 jouxtant l'extrémité du C, contre laquelle l'extrémité libre du doigt 3 de fermeture, prend appui en position fermée du doigt 3 de fermeture.

Cet organe 6 de verrouillage est un levier pivotant à deux bras avec l'un des bras, dit premier bras, qui s'étend depuis la liaison pivot de l'organe 6 de verrouillage au corps 2 en direction d'une extrémité du C, pour former un rôle de butée du doigt 3 de fermeture, tandis que l'autre bras, dit deuxième bras, s'étend depuis la liaison pivot de l'organe 6 de verrouillage au corps 2 en direction du fond du C, ce second bras étant concave à concavité orientée en direction de l'Intérieur du C pour former un creux de réception d'une corde 20 ou équivalent.

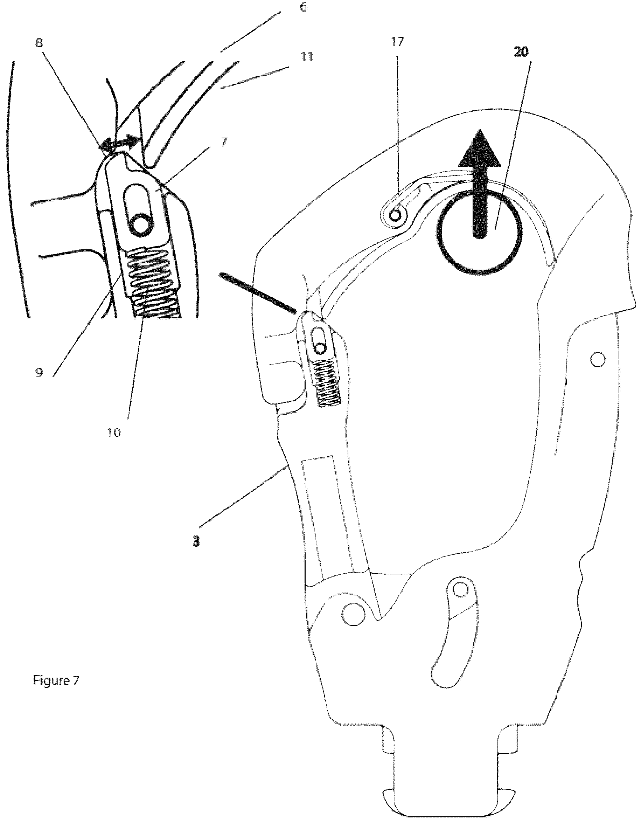

On comprend que grâce à la corde 20 qui entoure partiellement le mousqueton 1 à ce niveau, lorsque le mousqueton 1 est soumis à une charge, il est généré un déplacement à pivotement de l'organe 6 de verrouillage dans le sens d'un écartement du premier bras du corps 2 et d'un rapprochement du deuxième bras du corps 2, dans cette position écartée du premier bras correspondant à la position active de l'organe 6 de verrouillage, une butée 7 de verrouillage du doigt 3 de fermeture contre laquelle le doigt 3 de fermeture bute lors du déplacement du doigt 3 de fermeture de la position fermée à la position ouverte comme cela est visible à la figure 7, de sorte que tout déplacement du doigt 3 de fermeture de la position fermée à la position ouverte est empêché en position active de l'organe de verrouillage.

Cet organe 6 de verrouillage est équipé d'un organe 17 de rappel en position inactive. Cet organe 17 de rappel est ici formé par un ressort interposé entre le corps 2 et le second bras de l'organisme 6 de verrouillage. La corde 20 agit donc à l'encontre de cet organe 17 de rappel lors de sa tension au cours de laquelle elle génère une pression sur le second bras de l'organe 6 de verrouillage dans le sens d'un rapprochement du second bras du corps 2 et par suite d'un écartement du premier bras du corps 2.

Ce premier bras forme, au niveau de son extrémité libre en position écartée du corps 2 correspondant à la position active de l'organe 6 de verrouillage, une butée 7 de verrouillage du doigt 3 de fermeture contre laquelle une partie 8 active du doigt 3 de fermeture bute lors d'un déplacement du doigt 3 de fermeture de la position fermée à la position ouverte de l'ouverture 4 d'accès.

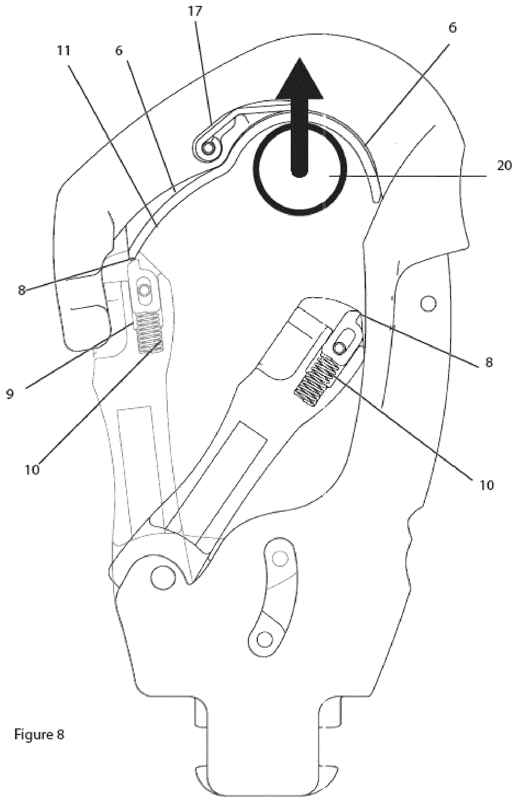

Cette partie 8 active du doigt 3 de fermeture est en contact d'appui avec l'organe 6 de verrouillage, en position fermée du doigt 3 de fermeture et, à l'état activé, c'est-à-dire en position active, de l'organe 6 de verrouillage, et à l'état entraîné en déplacement du doigt 3 de fermeture de la position fermée à la position ouverte de l'ouverture 4 d'accès. Cette partie 8 active est une partie 8 escamotable effaçable par contact d'appui avec l'organe 6 de verrouillage, en position active de l'organe 6 de verrouillage, lors du passage du doigt 3 de fermeture de la position ouverte à la position fermée du doigt 3 de fermeture pour permettre le passage du doigt 3 de fermeture de la position ouverte à la position fermée y compris en position active de l'organe 6 de verrouillage, comme illustré à la figure 8.

Cette partie 8 active escamotable du doigt 3 de fermeture est disposée au niveau de l'extrémité dite libre du doigt 3 de fermeture opposée à celle couplée au corps 2 par une liaison 5 articulée. Cette partie 8 active escamotable du doigt 3 de fermeture est une partie montée, pour le passage d'une position non effacée à une position effacée, mobile à coulissement dans une glissière 9 ménagée dans le doigt 3 de fermeture.

En effet, le doigt 3 de fermeture est, au niveau de son extrémité libre, un doigt creux pour permettre de ménager à l'intérieur du doigt une glissière 9 à l'intérieur de laquelle la partie 8 active escamotable du doigt 3 de fermeture peut coulisser.

Le doigt 3 de fermeture comprend un organe 10, tel qu'un ressort de rappel, de la partie 8 active escamotable du doigt 3 de fermeture en position non effacée, c'est-à-dire une position dans laquelle la partie 8 active fait saillie de la glissière 9 ménagée au niveau de l'extrémité libre du doigt 3 de fermeture.

L'organe 6 de verrouillage présente, quant à lui, une surface de came 11, formant rampe, avec laquelle la partie 8 active escamotable du doigt 3 de fermeture est, en position active de l'organe 6 de verrouillage, en contact d'appui lors du passage du doigt 3 de fermeture de la position ouverte à la position fermée de l'ouverture 4 d'accès. Cette surface de came 11 est interrompue au moins en position de fin de course de fermeture du doigt 3 de fermeture pour le passage de la partie 8 active escamotable du doigt 3 de fermeture d'une position effacée à une position non effacée. Cette surface de came 11 est formée par la surface du premier bras de l'organe 6 de verrouillage opposé à la surface du premier bras, en regard du corps 2, et avec laquelle l'organe 6 déverrouillage s'applique sur le corps 2 en position inactive.

La figure 8 illustre l'escamotage de la partie 8 active du doigt 3 de fermeture. Comme illustré à la figure 8, la partie 8 active du doigt 3 de fermeture est rappelée par l'organe 10 de rappel en position non effacée, c'est-à-dire en saillie de la glissière 9 ménagée à l'extrémité du doigt 3 de fermeture. Lors du passage de la position ouverte à la position fermée du doigt 3 de fermeture, si l'organe 6 de verrouillage est en position active sous l'effet d'une corde 20, comme illustré à la figure 8, cette partie 8 active du doigt 3 de fermeture glisse contre le premier bras de l'organe 6 de verrouillage qui est écarté du corps 2 pour former un profil de came suivi par la partie 8 active du doigt 3 de fermeture au cours de son déplacement à pivotement de la position ouverte à la position fermée.

Ce profil de came est conformé de manière à générer par contact d'appui avec la partie 8 active du doigt 3 de fermeture, un déplacement à coulissement de la partie 8 active à l'intérieur de la glissière 9, dans le sens d'un effacement à l'encontre de l'action de l'organe 10 de rappel. Cet effacement s'opère jusqu'à ce que la partie 8 active du doigt 3 de fermeture ait franchi l'extrémité du premier bras de l'organe 6 de verrouillage et ne soit plus en contact avec ce premier bras.

La partie 8 active de l'organe du doigt 3 de fermeture peut alors, sous l'effet de l'organe 10 de rappel, revenir en position non effacée, c'est-à-dire en saillie de la glissière ménagée à l'extrémité libre du doigt 3 de fermeture, de sorte que tout déplacement en sens inverse, c'est-à-dire de la position fermée à la position ouverte du doigt 3 de de fermeture, est empêché, cette partie 8 active du doigt 3 de fermeture venant buter contre l'extrémité du premier bras de l'organe 6 de verrouillage.

Seul le relâchement de la traction exercée par la corde 20 permet, à l'organe 6 de verrouillage, de revenir, sous l'effet de son organe 17 de rappel en position inactive dans laquelle le premier bras de l'organe 6 de verrouillage est rapproché du corps 6 et ne forme plus une butée disposée sur la trajectoire suivie par la partie 8 active du doigt 3 de fermeture lors du passage du doigt 3 de fermeture de la position fermée à la position ouverte.

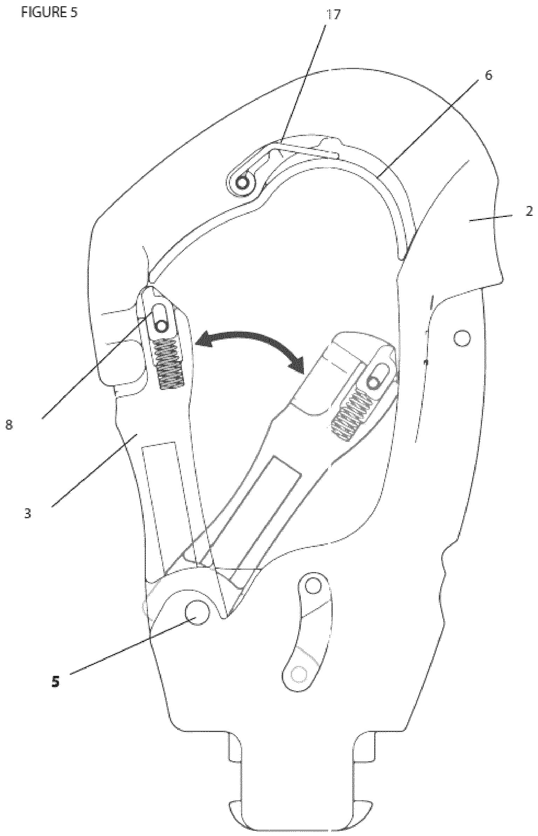

Dans l'exemple représenté aux figures 3 et 5, le mousqueton 1 comprend un organe supplémentaire de verrouillage du doigt 3 de fermeture en position fermée. Cet organe supplémentaire de verrouillage, appelé deuxième organe de verrouillage 12, est monté mobile entre une première position, dite déverrouillée, dans laquelle le doigt 3 de fermeture est libre de se déplacer entre ses positions ouverte et fermée et une seconde position, dite de verrouillage, dans laquelle le doigt 3 de fermeture est maintenu en position fermée. Ce deuxième organe de verrouillage 12 est équipé d'un organe 16 élastiquement déformable de rappel en seconde position, tel qu'un ressort.

Ce deuxième organe de verrouillage 12 est formé par un levier pivotant. Ce levier pivotant est disposé à l'extérieur du C formé par le corps 2 sur la partie du fond du C du corps 2. Ce deuxième organe de verrouillage 12 pivote autour d'un axe parallèle à l'axe de pivotement du doigt 3 de fermeture ou de l'organe 6 de verrouillage. L'axe de pivotement du deuxième organe de verrouillage 12 est disposé à l'extrémité du levier constitutif du deuxième organe de verrouillage 12 opposée à celle en lien avec le doigt 3 de fermeture.

En effet, dans les exemples représentés, le doigt 3 de fermeture est un doigt coudé qui se prolonge à angle droit au-delà de la liaison 5 articulée pour former deux bras parallèles reliés entre eux à leur extrémité par une tige 19 visible à la figure 3. Cette tige 19 est apte à traverser le corps 2 et le deuxième organe de verrouillage 12. En particulier, cette tige 19 traverse le corps 2 et le deuxième organe de verrouillage 12 au niveau de lumières ménagées respectivement dans le corps et dans le deuxième organe de verrouillage 12, ces lumières étant décrites plus en détail ci-après.

Le deuxième organe de de verrouillage 12 est donc muni d'une lumière 13 de verrouillage visible à la figure 3. Cette dernière a, dans l'exemple représenté, la forme d'un haricot. De même, le corps 2 dispose d'une lumière 14, également en forme de haricot et de longueur ici inférieure à celle de la lumière 13. Ces deux lumières se superposent au moins partiellement et délimitent entre elles un logement 15 de réception d'au moins une partie du doigt 3 de fermeture, en l'occurrence de la tige 19 reliant les deux bras de la partie coudée du doigt 3 de fermeture.

Ce logement 15 est de dimension et/ou de forme ajustables en fonction de la position en particulier angulaire occupée par le deuxième organe de verrouillage 12. En effet, les lumières 13 et 14 se superposent plus ou moins en fonction de la position angulaire prise par le deuxième organe de verrouillage 12. Le deuxième organe de verrouillage 12 est un organe actionnable manuellement par pression exercée sur le deuxième organe de verrouillage depuis l'extérieur en direction de l'intérieur du corps 2. Cette pression permet un déplacement à pivotement du deuxième organe de verrouillage 12 depuis une première position vers une seconde position à l'encontre d'un organe 16 de rappel tendant à rappeler le deuxième organe de verrouillage 12 dans la première position.

Dans la première position du deuxième organe de verrouillage 10, c'est-à-dire à l'état de non sollicité par l'opérateur, le logement 15 de réception de la tige 19 du doigt 3 de fermeture ménagé par les lumières 13 et 14 est un logement circulaire emprisonnant la partie du doigt 3 de fermeture disposée dans ledit logement 15, à savoir la tige 19, pour assurer un maintien du doigt 3 de fermeture en position fermée. Ainsi, tout déplacement à pivotement du doigt 3 de fermeture dans cette première position du deuxième organe de verrouillage 12 est empêché. Au cours de l'entraînement en déplacement à pivotant du deuxième organe de verrouillage 12 vers la seconde position, par rapprochement du deuxième organe de verrouillage 12 du corps 2 à l'encontre de l'action de l'organe 16 de rappel, tel qu'un ressort, disposé entre le deuxième organe de verrouillage 12 et le corps 2, le positionnement relatif des lumières 13 et 14 se modifie pour augmenter les surfaces des lumières 13 et 14 qui se superposent.

Ainsi en seconde position du deuxième organe de verrouillage 12, les lumières 13 et 14 ménagent entre elles un chemin de guidage allongé, apte, être parcouru par la partie du doigt 3 de fermeture disposée dans ledit logement, à savoir la tige 19, à l'état entraîné en déplacement du doigt 3 de fermeture entre ses positions fermée et ouverte.

Il est donc nécessaire, pour permettre le passage du doigt 3 de fermeture de la position fermée à la position ouverte, d'actionner, dans un premier temps, le deuxième organe de verrouillage 12 depuis sa première position vers sa seconde position, en pressant par exemple avec la main le deuxième organe de verrouillage 12 contre le corps 2, pour ensuite pouvoir déplacer à pivotement à l'aide, par exemple d'un doigt de la main, le doigt 3 de fermeture de la position fermée à la position ouverte. Le relâchement du doigt 3 de fermeture entraîne, sous l'effet de l'organe 18 de rappel, un retour automatique du doigt 3 de fermeture en position fermée.

Si dans l'intervalle, le mousqueton 1 a été mis sous tension et que l'organe 6 de verrouillage est en position active, le retour du doigt 3 de fermeture jusqu'à sa position complètement fermée suppose pour l'opérateur d'agir sur le doigt 3 de fermeture en exerçant une pression sur le doigt 3 de fermeture en direction de la position fermée pour permettre par contact d'appui entre la partie 8 active du doigt 3 de fermeture et l'organe 6 de verrouillage, un effacement de la partie 8 active du doigt 3 de fermeture à l'intérieur de la glissière jusqu'à ce que le contact avec l'organe 6 de verrouillage soit interrompu.

Dans cette position d'interruption du contact avec l'organe 6 de verrouillage, qui correspond à la position fermée du doigt 3 de fermeture, la partie 8 active du doigt 3 de fermeture est rappelée en position non effacée et tout déplacement du doigt 3 de fermeture depuis la position fermée vers la position ouverte est empêché par contact de la partie 8 active du doigt 3 de fermeture avec l'extrémité de l'organe 6 de verrouillage qui, en position active, forme une butée 7 de verrouillage du doigt 3 de fermeture en position fermée. Cette impossibilité de déplacement est visible à la figure 7.

Pour permettre le passage de la position fermée à la position ouverte du doigt 3 de fermeture, il est nécessaire d'attendre le retour de l'organe 6 de verrouillage en position inactive sous l'action de l'organe 17 de rappel de l'organe 6 de verrouillage en position inactive, ce retour se produisant lorsque la pression exercée par la corde 20 sur l'organe 6 de verrouillage se relâche.

Le doigt 3 de fermeture peut, à nouveau dans cette position inactive de l'organe 6 de verrouillage, passer de la position fermée à la position ouverte, comme illustré à la figure 5, sous réserve de l'actionnement préalable du deuxième organe de verrouillage 12 comme décrit ci-dessus.

En résumé, le passage du doigt 3 de fermeture de la position fermée à la position ouverte nécessite que l'organe 6 de verrouillage soit en position inactive et que le deuxième organe de verrouillage 12 soit actionné par l'opérateur et amené en seconde position. Le passage du doigt 3 de fermeture de la position ouverte à la position fermée peut être obtenu en toutes circonstances, indépendamment de la position inactive ou active de l'organe 6 de verrouillage.

## Revendications

1. Mousqueton (1) comprenant un corps (2) dit annulaire ouvert présentant une ouverture (4) d'accès à l'intérieur dudit corps (2), un doigt (3) de fermeture de ladite ouverture (4) relié audit corps (2) par une liaison (5) articulée pour un déplacement dudit doigt (3) de fermeture entre une position fermée et une position ouverte de ladite ouverture (4) d'accès, un organe (6) de verrouillage du doigt (3) de fermeture en position fermée, cet organe (6) de verrouillage étant configuré pour passer d'une position inactive à une position active, sous l'effet d'une pression exercée sur ledit organe (6) de verrouillage depuis l'intérieur dudit corps (2) en direction de l'extérieur dudit corps (2), cet organe (6) de verrouillage formant, en position active, une butée (7) de verrouillage du doigt (3) de fermeture contre laquelle une partie (8) active du doigt (3) de fermeture bute lors d'un déplacement du doigt (3) de fermeture de la position fermée à la position ouverte de l'ouverture (4) d'accès, **caractérisé en ce que** la partie (8) active du doigt (3) de fermeture en contact d'appui avec l'organe (6) de verrouillage, à l'état activé de l'organe (6) de verrouillage et entraîné en déplacement du doigt (3) de fermeture de la position fermée à la position ouverte de l'ouverture (4) d'accès, est une partie (8) escamotable configurée pour s'effacer par contact d'appui avec l'organe (6) de verrouillage en position active de l'organe (6) de verrouillage, lors du passage du doigt (3) de fermeture de la position ouverte à la position fermée du doigt (3) de fermeture, pour permettre le passage du doigt (3) de fermeture de la position ouverte à la position fermée y compris en position active de l'organe (6) de verrouillage.

2. Mousqueton (1) selon la revendication 1, **caractérisé en ce que** la partie (8) active escamotable du doigt (3) de fermeture est une partie montée, pour le passage d'une position non effacée à une position effacée, mobile à coulissement dans une glissière (9) ménagée dans le doigt (3) de fermeture, et **en ce que** le doigt (3) de fermeture comprend un organe (10), tel qu'un ressort, de rappel de ladite partie (8) active escamotable en position non effacée.

3. Mousqueton (1) selon l'une des revendications 1 ou 2, **caractérisé en ce que** la partie (8) active escamotable du doigt (3) de fermeture est disposée au niveau de l'extrémité dite libre du doigt (3) de fermeture opposée à celle couplée au corps (2) par une liaison (5) articulée.

4. Mousqueton (1) selon l'une des revendications 1 à 3, **caractérisé en ce que** l'organe (6) de verrouillage présente une surface de came (11) formant rampe avec laquelle la partie (8) active escamotable du doigt (3) de fermeture est, en position active de l'organe de verrouillage, en contact d'appui lors du passage du doigt (3) de fermeture de la position ouverte à la position fermée de l'ouverture (4) d'accès, cette surface de came (11) étant interrompue au moins en position de fin de course de fermeture du doigt (3) de fermeture pour le passage de la partie (8) active escamotable du doigt (3) de fermeture d'une position effacée à une position non effacée.

5. Mousqueton (1) selon l'une des revendications 1 à 4, **caractérisé en ce que** la liaison (5) articulée reliant le doigt (3) de fermeture de ladite ouverture (4) audit corps (2) pour un déplacement dudit doigt (3) de fermeture entre une position fermée et une position ouverte de ladite ouverture (4) d'accès est une liaison à pivotement et **en ce que** le doigt (3) de fermeture est configuré pour passer de la position fermée à la position ouverte de l'ouverture (4) d'accès par déplacement à pivotement en direction de l'intérieur dudit corps (2).

6. Mousqueton (1) selon l'une des revendications 1 à 5, **caractérisé en ce que** l'organe (6) de verrouillage est, pour son passage d'une position inactive à une position active, un organe pivotant couplé à pivotement audit corps (2), cet organe (6) de verrouillage s'étendant à l'intérieur dudit corps (2) le long d'une surface périphérique interne dudit corps (2).

7. Mousqueton (1) selon l'une des revendications 1 à 6, **caractérisé en ce que** la liaison (5) articulée reliant le doigt (3) de fermeture de ladite ouverture (4) audit corps (2) pour un déplacement dudit doigt (3) de fermeture entre une position fermée et une position ouverte de ladite ouverture (4) d'accès étant une liaison à pivotement autour d'un axe, l'organe (6) de verrouillage est, pour le passage d'une position inactive à une position active, monté mobile à pivotement autour d'un axe parallèle à l'axe de pivotement de la liaison (5) articulée du doigt (3) de fermeture au corps (2).

8. Mousqueton (1) selon l'une des revendications 1 à 7, **caractérisé en ce que** le mousqueton (1) comprend un organe supplémentaire de verrouillage du doigt (3) de fermeture en position fermée, cet organe supplémentaire de verrouillage, appelé deuxième organe de verrouillage (12), étant monté mobile entre une première position dite déverrouillée dans laquelle le doigt (3) de fermeture est libre de de se déplacer entre ses positions ouverte et fermée et une seconde position dite de verrouillage dans laquelle le doigt (3) de fermeture est maintenu en position fermée, ce deuxième organe de verrouillage (12) étant équipé d'un organe (16) élastiquement déformable de rappel en seconde position de verrouillage.

9. Mousqueton (1) selon la revendication 8, **caractérisé en ce que** le deuxième organe de verrouillage (12) est formé par un levier pivotant muni d'une lumière (13) de verrouillage coopérant avec une lumière (14) de verrouillage ménagée dans ledit corps (2), lesdites lumières (13, 14) délimitant entre elles un logement (15) de réception d'au moins une partie du doigt (3) de fermeture de dimension et/ou de forme ajustables en fonction de la position occupée par le deuxième organe de verrouillage (12).

10. Mousqueton (1) selon la revendication 9, **caractérisé en ce que** le logement (15) de réception d'au moins une partie du doigt (3) de fermeture ménagé par lesdites lumières (13, 14) est, en première position du deuxième organe de verrouillage (12), un logement circulaire emprisonnant la partie du doigt (3) de fermeture disposée dans ledit logement (15), pour assurer un maintien du doigt (3) de fermeture en position fermée, ce logement (15) formant, en seconde position de verrouillage du deuxième organe de verrouillage (12), un chemin de guidage allongé apte à être parcouru par la partie du doigt (3) de fermeture disposée dans ledit logement (15), à l'état entraîné en déplacement du doigt (3) de fermeture entre ses positions fermée et ouverte.

## Patentansprüche

1. Karabiner (1), umfassend einen sogenannten ringförmigen offenen Körper (2), der eine Zugangsöffnung (4) zum Inneren des Körpers (2) aufweist, einen Schließteil (3) zum Verschließen der Öffnung (4), der mit dem Körper (2) zwecks Verlagerung des Schließteils (3) zwischen einer Schließstellung und einer Offenstellung der Zugangsöffnung (4) durch eine Gelenkverbindung (5) verbunden ist, ein Verriegelungselement (6) zum Verriegeln des Schließteils (3) in der Schließstellung, wobei dieses Verriegelungselement (6) dazu ausgestaltet ist, aus einer inaktiven Stellung in eine aktive Stellung überzugehen unter der Wirkung eines Drucks, der auf das Verriegelungselement (6) vom Inneren des Körpers (2) in Richtung der Außenseite des Körpers (2) ausgeübt wird, wobei dieses Verriegelungselement (6) in der aktiven Stellung einen Anschlag (7) zum Verriegeln des Schließteils (3) bildet, gegen den ein aktiver Teil (8) des Schließteils (3) bei einer Bewegung des Schließteils (3) aus der Schließstellung in die Offenstellung der Zugangsöffnung (4) anschlägt, **dadurch gekennzeichnet, dass** der aktive Teil (8) des Schließteils (3) in Anlagekontakt mit dem Verriegelungselement (6), im aktivierten und zur Bewegung des Schließteils (3) aus der Schließstellung in die Offenstellung der Zugangsöffnung (4) angetriebenen Zustand des Verriegelungselements (6) ein einziehbarer Teil (8) ist, der dazu ausgestaltet ist, durch Anlagekontakt mit dem Verriegelungselement (6) in der aktiven Stellung des Verriegelungselements (6) beim Übergang des Schließteils (3) aus der Offenstellung in die Schließstellung des Schließteils (3) versenkt zu werden, um den Übergang des Schließteils (3) aus der Offenstellung in die Schließstellung, auch in der aktiven Stellung des Verriegelungselements (6), zu ermöglichen.

2. Karabiner (1) nach Anspruch 1, **dadurch gekennzeichnet, dass** der einziehbare aktive Teil (8) des Schließteils (3) ein Teil ist, der zwecks Übergang aus einer nicht versenkten Stellung in eine versenkte Stellung in einer in dem Schließteil (3) ausgebildeten Gleitbahn (9) gleitbeweglich gelagert ist, und dass der Schließteil (3) ein Element (10), wie eine Feder, zum Zurückstellen des einziehbaren aktiven Teil (8) in die nicht versenkte Stellung umfasst.

3. Karabiner (1) nach einem der Ansprüche 1 oder 2, **dadurch gekennzeichnet, dass** der einziehbare aktive Teil (8) des Schließteils (3) an dem sogenannten freien Ende des Schließteils (3) angeordnet ist, das entgegengesetzt zu dem durch eine Gelenkverbindung (5) mit dem Körper (2) gekoppelten ist.

4. Karabiner (1) nach einem der Ansprüche 1 bis 3, **dadurch gekennzeichnet, dass** das Verriegelungselement (6) eine Nockenfläche (11) aufweist, die eine Rampe bildet, mit welcher der einziehbare aktive Teil (8) des Schließteils (3) in der aktiven Stellung des Verriegelungselements in Anlagekontakt ist beim Übergang des Schließteils (3) aus der Offenstellung in die Schließstellung der Zugangsöffnung (4), wobei diese Nockenfläche (11) mindestens in der Endlagenschließstellung des Schließteils (3) zwecks Übergang des einziehbaren aktiven Teils (8) des Schließteils (3) aus einer versenkten Stellung in eine nicht versenkte Stellung unterbrochen ist.

5. Karabiner (1) nach einem der Ansprüche 1 bis 4, **dadurch gekennzeichnet, dass** die Gelenkverbindung (5), die den Schließteil (3) zum Verschließen der Öffnung (4) zwecks Bewegung des Schließteils (3) zwischen einer Schließstellung und einer Offenstellung der Zugangsöffnung (4) mit dem Körper (2) verbindet, eine Schwenkverbindung ist, und dass der Schließteil (3) dazu ausgestaltet ist, durch Schwenkbewegung in Richtung des Inneren des Körpers (2) aus der Schließstellung in die Offenstellung der Zugangsöffnung (4) überzugehen.

6. Karabiner (1) nach einem der Ansprüche 1 bis 5, **dadurch gekennzeichnet, dass** das Verriegelungselement (6) zwecks seines Übergangs aus einer inaktiven Stellung in eine aktive Stellung ein schwenkbares Element ist, das mit dem Körper (2) schwenkgekoppelt ist, wobei sich dieses Verriegelungselement (6) im Inneren des Körpers (2) entlang einer inneren Randfläche des Körpers (2) erstreckt.

7. Karabiner (1) nach einem der Ansprüche 1 bis 6, **dadurch gekennzeichnet, dass**, wenn die Gelenkverbindung (5), die den Schließteil (3) zum Verschließen der Öffnung (4) zwecks Bewegung des Schließteils (3) zwischen einer Schließstellung und einer Offenstellung der Zugangsöffnung (4) mit dem Körper (2) verbindet, eine Schwenkverbindung um eine Achse ist, das Verriegelungselement (6) zwecks Übergang aus einer inaktiven Stellung in eine aktive Stellung schwenkbeweglich um eine Achse gelagert ist, die parallel zu der Schwenkachse der Gelenkverbindung (5) des Schließteils (3) am Körper (2) verläuft.

8. Karabiner (1) nach einem der Ansprüche 1 bis 7, **dadurch gekennzeichnet, dass** der Karabiner (1) ein zusätzliches Verriegelungselement zum Verriegeln des Schließteils (3) in der Schließstellung umfasst, wobei dieses zusätzliche Verriegelungselement, das als zweites Verriegelungselement (12) bezeichnet wird, zwischen einer ersten sogenannten entriegelten Stellung, in welcher sich der Schließteil (3) zwischen seiner Offen-und Schließstellung frei bewegen kann, und einer zweiten sogenannten Verriegelungsstellung, in welcher der Schließteil (3) in der Schließstellung gehalten wird, beweglich gelagert ist, wobei dieses zweite Verriegelungselement (12) mit einem elastisch verformbaren Element (16) zum Zurückstellen in die zweite Verriegelungsstellung ausgestattet ist.

9. Karabiner (1) nach Anspruch 8, **dadurch gekennzeichnet, dass** das zweite Verriegelungselement (12) durch einen schwenkbaren Hebel gebildet wird, der mit einem Verriegelungsschlitz (13) versehen ist, der mit einem in dem Körper (2) ausgebildeten Verriegelungsschlitz (14) zusammenwirkt, wobei die Schlitze (13, 14) zwischen sich eine Aufnahme (15) zum Aufnehmen mindestens eines Teils des Schließteils (3) mit in Abhängigkeit von der von dem zweiten Verriegelungselement (12) eingenommenen Stellung anpassbarer Größe und/oder Form begrenzen.

10. Karabiner (1) nach Anspruch 9, **dadurch gekennzeichnet, dass** die durch die Schlitze (13, 14) ausgebildete Aufnahme (15) zum Aufnehmen mindestens eines Teils des Schließteils (3) in der ersten Stellung des zweiten Verriegelungselements (12) eine kreisförmige Aufnahme ist, die den in der Aufnahme (15) angeordneten Teil des Schließteils (3) einschließt, um ein Halten des Schließteils (3) in der Schließstellung zu gewährleisten, wobei diese Aufnahme (15) in der zweiten Verriegelungsstellung des zweiten Verriegelungselements (12) eine längliche Führungsbahn bildet, die geeignet ist, von dem in der Aufnahme (15) angeordneten Teil des Schließteils (3) in dem zur Bewegung des Schließteils (3) zwischen seiner Schließ- und Offenstellung angetriebenen Zustand durchlaufen zu werden.

## Claims

1. Carabiner (1) comprising a body (2), referred to as open annular body, having an opening (4) for accessing the interior of said body (2), a finger (3) that is intended for closing said opening (4) and is connected to said body (2) by an articulated connection (5) for moving said closure finger (3) between a closed position and an open position in said access opening (4), a member (6) for locking the closure finger (3) in the closed position, this locking member (6) being configured to pass from an inactive position to an active position, under the effect of pressure exerted on said locking member (6) from the interior of said body (2) towards the exterior of said body (2), this locking member (6) forming, in the active position, a stop (7) that is intended for locking the closure finger (3) and against which an active part (8) of the closure finger (3) abuts during a movement of the closure finger (3) from the closed position to the open position in the access opening (4), **characterized in that** the active part (8) of the closure finger (3) in bearing contact with the locking member (6), when the locking member (6) is in the activated state and the closure finger (3) is being moved from the closed position to the open position in the access opening (4), is a retractable part (8) configured to retract through bearing contact with the locking member (6) when the locking member (6) is in the active position, during the passage of the closure finger (3) from the open position to the closed position of the closure finger (3), in order to allow the closure finger (3) to pass from the open position to the closed position, including when the locking member (6) is in the active position.

2. Carabiner (1) according to Claim 1, **characterized in that** the retractable active part (8) of the closure finger (3) is a part that is mounted, in order to pass from a non-retracted position to a retracted position, so as to be able to slide in a slideway (9) formed in the closure finger (3), and **in that** the closure finger (3) comprises a return member (10), such as a spring, for returning said retractable active part (8) to the non-retracted position.

3. Carabiner (1) according to either of Claims 1 and 2, **characterized in that** the retractable active part (8) of the closure finger (3) is arranged at the end that is referred to as the free end of the closure finger (3) and is at the opposite end to the one coupled to the body (2) by an articulated connection (5).

4. Carabiner (1) according to one of Claims 1 to 3, **characterized in that** the locking member (6) has a cam surface (11) forming a ramp with which the retractable active part (8) of the closure finger (3) is, when the locking member is in the active position, in bearing contact during the passage of the closure finger (3) from the open position to the closed position in the access opening (4), this cam surface (11) being interrupted at least when the closure finger (3) is in the end-of-closure-travel position in order for the retractable active part (8) of the closure finger (3) to pass from a retracted position to a non-retracted position.

5. Carabiner (1) according to one of Claims 1 to 4, **characterized in that** the articulated connection (5), which connects the finger (3) for closing said opening (4) to said body (2) and is intended for moving said closure finger (3) between a closed position and an open position in said access opening (4), is a pivot connection, and **in that** the closure finger (3) is configured to pass from the closed position to the open position in the access opening (4) by pivoting towards the interior of said body (2).

6. Carabiner (1) according to one of Claims 1 to 5, **characterized in that** the locking member (6) is, in order to pass from an inactive position to an active position, a pivoting member pivotably coupled to said body (2), this locking member (6) extending inside said body (2), along an internal peripheral surface of said body (2).

7. Carabiner (1) according to one of Claims 1 to 6, **characterized in that**, since the articulated connection (5), which connects the finger (3) for closing said opening (4) to said body (2) and is intended for moving said closure finger (3) between a closed position and an open position in said access opening (4), is a connection that pivots about a pin, the locking member (6) is, in order to pass from an inactive position to an active position, mounted so as to be able to pivot about a pin parallel to the pivot pin of the articulated connection (5) of the closure finger (3) to the body (2).

8. Carabiner (1) according to one of Claims 1 to 7, **characterized in that** the carabiner (1) comprises an additional member for locking the closure finger (3) in the closed position, this additional locking member, referred to as second locking member (12), being mounted so as to be able to move between a first position, referred to as unlocked position, in which the closure finger (3) is free to move between its open and closed positions, and a second position, referred to as locking position, in which the closure finger (3) is held in the closed position, this second locking member (12) being equipped with an elastically deformable return member (16) for returning to the locking second position.

9. Carabiner (1) according to Claim 8, **characterized in that** the second locking member (12) is formed by a pivoting lever provided with a locking slot (13) that cooperates with a locking slot (14) formed in said body (2), said slots (13, 14) delimiting between them a housing (15) that is intended for receiving at least part of the closure finger (3) and has a dimension and/or shape that can be adjusted depending on the position occupied by the second locking member (12).

10. Carabiner (1) according to Claim 9, **characterized in that** the housing (15) that is intended for receiving at least part of the closure finger (3) and is formed by said slots (13, 14) is, when the second locking member (12) is in the first position, a circular housing enclosing the part of the closure finger (3) that is arranged in said housing (15) in order to ensure that the closure finger (3) is held in the closed position, this housing (15) forming, when the second locking member (12) is in the locking second position, an elongate guide path along which the part of the closure finger (3) that is arranged in said housing (15) can pass, when the closure finger (3) is being moved between its closed and open positions.
